Europäisches Patentamt

European Patent Office

Office européen des brevets

(11) Veröffentlichungsnummer: **0 099 532**
A2

## EUROPÄISCHE PATENTANMELDUNG

(21) Anmeldenummer: 83106770.7

(22) Anmeldetag: 11.07.83

(51) Int. Cl.³: **C 08 L 33/08**
C 08 L 51/00

(30) Priorität: 23.07.82 DE 3227555

(43) Veröffentlichungstag der Anmeldung:
01.02.84 Patentblatt 84/5

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Wassmuth, Georg, Dr.
Von-Sturmfeder-Strasse 60
D-6700 Ludwigshafen(DE)

(72) Erfinder: Bernhard, Claus, Dr.
Uhlandstrasse 11
D-6719 Eisenberg(DE)

(72) Erfinder: Boehlke, Klaus, Dr.
Gerhart-Hauptmann-Strasse 53
D-6717 Hessheim(DE)

(72) Erfinder: Schmitt, Burghard, Dr.
Braeunigstrasse 12
D-6520 Worms 24(DE)

(54) **Thermoplastische Formmasse.**

(57) Die Erfindung betrifft eine thermoplastische Formmasse aus einem elastomeren Polymerisat A), einer auf das Polymerisat A), gepfropften Hülle B) und einem Copolymerisat C) als Harmatrix. Der Anteil des Polymerisats A) beträgt 1 bis 30 Gew.%, bezogen auf A + B + C. Es weist eine Einfriertemperatur, Tg, von weniger als 0°C und eine mittlere Teilchengröße von 200 bis 750 nm ($d_{50}$-Wert der integralen Masseverteilung) auf und ist aufgebaut aus:

50 bis 99,9 Gew.% mindestens eines Alkylacrylates mit 1 bis 8 Kohlenstoffatomen im Alkylrest und 0,1 bis 5 Gew.% eines polyfunktionellen, vernetzend wirkenden Monomeren. Die Pfropfhülle B) macht 5 bis 40 Gew.%, bezogen auf A + B + C, aus und ist aus wenigstens einem der Monomeren aus der Gruppe der

$b_1$) vinylaromatischen Monomeren und
$b_2$) der ethylenisch ungesättigten Monomeren aufgebaut.
Die Herstellung der Pfropfhülle B) erfolgt in zwei Stufen, wobei man in der ersten Stufe 20 bis 70 Gew. % der Monomeren $b_1$) und in der zweiten Stufe 30 bis 80 Gew.% eines Gemisches der Monomeren $b_1$ und $b_2$ im Gewichtsverhältnis 90 : 10 bis 60 : 40 anwendet.

Das Copolymerisat C) ist in einem Anteil von 35 bis 94 Gew.%, bezogen auf A + B + C, zugegen und ist aufgebaut aus einem vinylaromatischen Monomeren und einem ethylenisch ungesättigten Monomeren. Die Formmasse kann übliche Zusatzstoffe in wirksamen Mengen enthalten und wird zur Herstellung von Formteilen verwendet.

Thermoplastische Formmasse

Die Erfindung betrifft eine thermoplastische Formmasse aus mit kautschukartigen Acrylester-Polymerisaten schlagzäh modifizierten Styrol-Acrylnitril-Copolymerisaten.

Zum Stand der Technik nennen wir:

(1) US-PS 3 055 859
(2) DE-PS 12 60 135
(3) DE-PS 19 11 882 und
(4) DE-OS 28 26 925

Die Herstellung von witterungs- und alterungsbeständigen ASA-Polymerisaten ist u.a. in (1) und (2) beschrieben. Dabei wird zunächst das als Pfropfgrundlage dienende kautschukartige Acrylsäureester-Polymerisat durch Emulsionspolymerisation von Acrylsäureestern mit 4 bis 8 Kohlenstoffatomen hergestellt. Der dabei entstehende Latex hat einen mittleren Teilchendurchmesser im allgemeinen im Bereich $<$ 100 nm. Anschließend wird auf diesen Polyacrylsäureester-Latex ein Gemisch von Styrol und Acrylnitril aufgepfropft, wobei die Pfropfmischpolymerisation ebenfalls vorzugsweise in Emulsion durchgeführt wird. Zur Erzielung von ASA-Polymerisaten mit guten mechanischen Eigenschaften hat es sich als notwendig erwiesen, daß der als Pfropfgrundlage dienende Polyacrylsäureester-Kautschuk vernetzt ist, d.h., daß bei seiner Herstellung die Acrylsäureester mit geringen Mengen von bifunktionellen, vernetzend wirkenden Monomeren copolymerisiert werden. Die Vernetzung kann dabei einheitlich oder, wie in der DE-OS 21 62 485 beschrieben, uneinheitlich sein. Diese Produkte zeichnen sich durch eine verminderte Schlagzähigkeit und deutlich sichtbare Fließnahtmarkierungen beim Spritzguß aus.

Vo/P

Eine weitere Fortbildung des aus (2) bekannten Verfahrens ist in (3) beschrieben. Nach den Angaben in dieser Druckschrift wird als Pfropfgrundlage bei der Pfropfpolymerisation ein "großteiliger" Latex eines vernetzten Acrylsäureester-Polymerisats mit einem mittleren Teilchendurchmesser zwischen 150 und 800 nm und einer engen Teilchengrößenverteilung eingesetzt. Gegenüber den Produkten, die unter Verwendung von kleinteiligen Acrylsäureester-Polymerisat-Latices als Pfropfgrundlage hergestellt worden sind, zeichnen sich die ASA-Polymerisate, bei deren Herstellung großteilige Acrylsäureester-Polymerisat-Latices eingesetzt worden sind, durch verbesserte Kerbschlagzähigkeit, größere Härte und verminderte Schrumpfung aus. Im Gegensatz zu den ASA-Polymerisaten auf Basis von kleinteiligen Pfropfmischpolymerisaten lassen sich die ASA-Polymerisate auf Basis der großteiligen Pfropfmischpolymerisate wegen ihrer schlechten Einfärbbarkeit aber nur sehr bedingt zur Herstellung von farbigen Formkörpern verwenden. Färbt man ASA-Polymerisate auf Basis von großteiligen Pfropfmischpolymerisaten ein, lassen sich nur stumpfe Farbtönungen mit pastellartigem Charakter erhalten, nicht jedoch die vom Markt verlangten brillianten leuchtenden Farbeinstellungen ohne Eintrübung. Auch läßt die Schlagzähigkeit nach Bewitterung bei diesen Polymerisaten manche Wünsche offen.

In (4) werden ASA-Polymerisate mit einer hohen Schlagzähigkeit und einem guten Einfärbeverhalten beschrieben. Sie werden durch Abmischen zweier Pfropfkautschuke mit unterschiedlichen Teilchengrößen erreicht. Nachteil dieser Produkte sind jedoch die nach wie vor merkbaren Fließnahtmarkierungen bei der Verarbeitung im Spritzguß und das nach der Bewitterung absinkende mechanische Niveau der Formmassen.

Es bestand die Aufgabe, witterungsbeständige Produkte auf Basis von ASA-Polymerisaten zu schaffen, welche neben den günstigen Eigenschaften der bekannten Formmassen, wie Witterungs- und Alterungsbeständigkeit, Steifigkeit und Festigkeit, nicht nur eine deutlich verbesserte Schlagzähigkeit auch nach Bewitterung aufweisen, sondern darüber hinaus auch eine gute Einfärbbarkeit besitzen sollen, die die Herstellung von Formkörpern mit brillianten, leuchtenden Farben ohne Fließnahtmarkierungen gestattet.

Diese Aufgabe wird durch die erfindungsgemäßen Formmassen auf Basis eines Pfropfmischpolymerisats, aufgebaut aus einem weichen vernetzten Polyalkylacrylatkern und zwei Pfropfschalen von Styrol und Styrolcopolymeren, gelöst. Es war überraschend, daß dies hiermit gelingen würde.

Gegenstand der Erfindung sind somit thermoplastische Formmassen gemäß Patentanspruch 1.

Nachstehend werden die Zusammensetzung der Formmasse und der Komponenten und die Herstellung der Formmasse beschrieben.

Komponente A:

Die Herstellung der elastomeren Polymerisate (Pfropfgrundlage) und der Pfropfhülle, d.h. des Pfropfmischpolymerisates aus A) + B), erfolgt nach an sich bekannten Methoden.

Als elastomere Kautschuke A) dienen vernetzte Acrylsäureester-Polymerisate mit einer Glasübergangstemperatur, Tg, unter $0^{\circ}$C. Die vernetzten Acrylsäureester-Polymerisate sollen vorzugsweise eine Glastemperatur unter $-20^{\circ}$C, insbesondere unter $-30^{\circ}$C besitzen. Die Ermittlung der Glas-

0099532

übergangstemperatur der Acrylsäureester-Polymerisate kann z.B. nach der DSC-Methode (K.H. Illers, Makromol. Chemie 127 (1969), S. 1) erfolgen. Als Monomere $a_1$) für die Herstellung der Acrylsäureester-Polymerisate kommen insbesondere die Acrylsäurealkylester mit 1 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureethylhexylester genannt. Die Acrylsäureester können bei der Herstellung der als Pfropfgrundlage dienenden Acrylsäureester-Polymerisate allein oder auch in Mischung miteinander eingesetzt werden.

Um vernetzte Acrylsäureester-Polymerisate zu erhalten, wird die Polymerisation der Acrylsäureester in Gegenwart von 0,1 bis 5 Gew.%, vorzugsweise 1 bis 4 Gew.%, bezogen auf die bei der Herstellung der Pfropfgrundlage eingesetzten gesamten Monomeren, eines copolymerisierbaren, polyfunktionellen, vorzugsweise bifunktionellen, die Vernetzung bewirkenden Monomeren $b_2$) durchgeführt. Als solche bi- oder polyfunktionellen Vernetzungs-Monomeren $b_2$) eignen sich Monomere, die vorzugsweise zwei, gegebenenfalls auch mehr, zur Copolymerisation befähigte ethylenische Doppelbindungen enthalten, die nicht in den 1,3-Stellungen konjugiert sein. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 12 60 135).

Gegebenenfalls kann das elastomere Polymerisat A auch noch bis zu 50, insbesondere 20 bis 30 Gew.%, eines weiteren copolymerisierbaren Monomeren $a_3$),wie Butadien, Isopren,

Styrol, Acrylnitril, Methylmethacrylat und/oder Vinylmethylether enthalten.

Die Herstellung des Pfropfmischpolymerisates aus A) + B)
ist an sich bekannt und kann beispielsweise nach der in
der DE-PS 12 60 135 oder in DE-PS 19 11 882 (3) beschriebenen Methode erfolgen. Hierzu wird zunächst das elastomere
Polymerisat, die Pfropfgrundlage A), hergestellt, indem der
oder die Acrylsäureester $a_1$) und das polyfunktionelle, die
Vernetzung bewirkende Monomere $a_2$), gegebenenfalls zusammen
mit den weiteren Comonomeren $a_3$), in wäßriger Emulsion in an
und für sich bekannter Weise bei Temperaturen zwischen 20
und 100°C, vorzugsweise zwischen 50 und 80°C polymerisiert
werden. Es können die üblichen Emulgatoren, wie Alkalisalze von Alkyl- oder Alkylarylsulfonsäuren, Alkylsulfate,
Fettalkoholsulfonate, Salze höherer Fettsäuren mit 10 bis
30 Kohlenstoffatomen oder Harzseifen, verwendet werden.
Vorzugsweise nimmt man die Natriumsalze von Alkylsulfonaten oder Fettsäuren mit 10 bis 18 Kohlenstoffatomen. Es
ist günstig, die Emulgatoren in Mengen von 0,5 bis
5 Gew.%, insbesondere von 1 bis 2 Gew.%, bezogen auf die
bei der Herstellung der Pfropfgrundlage A) eingesetzten Monomeren, einzusetzen. Im allgemeinen wird bei einem
Wasser- zu Monomerenverhältnis von 2 : 1 bis 0,7 : 1 gearbeitet. Als Polymerisationsinitiatoren dienen insbesondere die gebräuchlichen Persulfate, wie z.B. Kaliumpersulfat, es können jedoch auch Redox-Systeme zum Einsatz gelangen. Die Initiatoren werden im allgemeinen in Mengen von
0,1 bis 1 Gew.%, bezogen auf die bei der Herstellung der
Pfropfgrundlage A) eingesetzten Monomeren, eingesetzt.

Als Polymerisationshilfsstoffe können die üblichen Puffersubstanzen, durch welche pH-Werte von vorzugsweise 6 bis
9 eingestellt werden - z.B. Natriumbicarbonat und Natriumpyrophosphat -, sowie 0 bis 3 Gew.% eines Molekulargewichts- reglers - wie Mercaptane, Terpinole oder dimeres $\alpha$-Methyl-
styrol - bei der Polymerisation verwendet werden.

Die genauen Polymerisationsbedingungen, insbesondere Art,
Dosierung und Menge des Emulgators, werden innerhalb der
oben angegebenen Bereiche im einzelnen so bestimmt, daß
der erhaltene Latex des vernetzten Acrylsäureester-Polymerisats einen $d_{50}$-Wert im Bereich von etwa 200 bis 750 nm,
vorzugsweise im Bereich von 250 bis 600 nm besitzt. Die
Teilchengrößen-Verteilung des Latex soll dabei vorzugsweise
eng sein. Der Quotient $Q = (d_{90} - d_{10})/d_{50}$ soll kleiner als
0,5, vorzugsweise kleiner als 0,35 sein.

Komponente B:

Zur Herstellung des Pfropfmischpolymerisats A) + B) wird
dann im nächsten Schritt in Gegenwart des so erhaltenen
Latex des vernetzten Acrylesterpolymerisats zuerst ein
vinylaromatisches Monomeres $b_1$) mit bis zu 12 Kohlenstoffatomen polymerisiert. Beispiele für solche Monomere sind
Styrol, $\alpha$-Methylstyrol und kernalkylierte Styrole, wie
p-Methylstyrol und tert.-Butylstyrol. Besonders bevorzugt
werden Styrol, $\alpha$-Methylstyrol und p-Methylstyrol eingesetzt. Es ist vorteilhaft, diese Pfropfmischpolymerisation
der Monomeren $b_1$) auf das als Pfropfgrundlage dienende
vernetzte Polyacrylsäureester-Polymerisat wieder in wäßriger Emulsion unter den üblichen, vorstehend aufgeführten
Bedingungen durchzuführen. Die Pfropfmischpolymerisation
kann zweckmäßig im gleichen System erfolgen wie die Emulsionspolymerisation zur Herstellung der Pfropfgrundlage A), wobei, falls notwendig, weiterer Emulgator und
Initiator zugegeben werden kann. Das aufzupfropfende
Monomere $b_1$), insbesondere Styrol, kann dem Reaktionsgemisch auf einmal, absatzweise in mehreren Stufen oder
vorzugsweise kontinuierlich während der Polymerisation zugegeben werden. Die Pfropfmischpolymerisation des Styrols in Gegenwart des vernetzten Acrylsäureester-Polymerisats wird so geführt, daß ein Pfropfgrad von 2,5 bis 25 Gew.%, vorzugsweise von 10 bis 20 Gew.%, im Pfropfmischpolymerisat B) resultiert. In einer zweiten Stufe wird dann die Pfropfmischpolymerisation mit einem Monomerengemisch aus mindestens einem vinylaromatischen Monomeren $b_1$) und mindestens einem copolymerisierbaren polaren Monomeren $b_2$) im Verhältnis von 90 : 10 bis 60 : 40, vorzugsweise 75 : 25 bis 65 : 35 fortgeführt. Beispiele für vinylaromatische Monomere $b_1$) sind bereits bei der ersten Pfropfstufe genannt. Beispiele für polare copolymerisierbare, ethylenisch ungesättigte Monomere $b_2$) sind Acrylnitril, (Meth)-Acrylsäurealkylester mit 1 bis 4 Kohlenstoffatomen im Alkylrest, Acrylsäure, Maleinsäureanhydrid, Acrylamid und/oder Vinylmethylether. Besonders bevorzugt werden Acrylnitril, Ethylacrylat, Methylmethacrylat und Gemische aus diesen. Als besonders bevorzugte Monomeren-Gemische in der 2. Stufe der Pfropfung werden vor allem Styrol und Acrylnitril, $\alpha$-Methylstyrol und Acrylnitril und Styrol, Acrylnitril und Methylmethacrylat eingesetzt. Auch der zweite Schritt der Pfropfmischpolymerisation wird zweckmäßigerweise im gleichen System durchgeführt; dabei kann, falls notwendig, weiterer Emulgator und Initiator zugegeben werden. Das aufzupfropfende Monomeren-Gemisch aus z.B. Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemischs von z.B. Styrol und Acrylnitril in Gegenwart des vernetzten Acrylsäureester-Polymerisats wird so geführt, daß ein Pfropfgrad von 10 bis 45 Gew.%, vorzugsweise von 15 bis 40 Gew.%, im Pfropfmischpolymerisat B) resultiert. Die Pfropfmischpolymerisate sollen mittlere Teilchengrößen von 200 bis 750 nm ($d_{50}$-Wert der integralen Massever-

0099532

teilung) besitzen. Die Bedingungen der Pfropfmischpolymerisation sind so zu wählen, daß Teilchengrößen in diesem Bereich resultieren. Maßnahmen hierzu sind bekannt und z.B. in der DE-PS 12 60 135 und der DE-OS 28 26 925 beschrieben.

Komponente C:

Zusätzlich zu der Komponente A) + B), dem Pfropfmischpolymerisat, enthalten die erfindungsgemäßen Mischungen als weitere Komponente C) eine Hartkomponente aus einem oder mehreren Copolymerisaten von Styrol und/oder $\alpha$-Methylstyrol mit Acrylnitril in einem Anteil von 35 bis 94 Gew.% bezogen auf A + B + C. Der Acrylnitril-Gehalt in diesen Copolymerisaten der Hartkomponente C) soll 20 bis 40 Gew.%, bezogen auf das jeweilige Copolymerisat der Hartkomponente, betragen. Zu dieser Hartkomponente C) zählen auch die bei der Pfropfmischpolymerisation zur Herstellung der Komponente B) entstehenden freien, nicht gepfropften Styrol/Acrylnitril-Copolymerisate. Je nach den bei der Pfropfmischpolymerisation für die Herstellung des Pfropfmischpolymerisats B) gewählten Bedingungen kann es möglich sein, daß bei der Pfropfmischpolymerisation schon ein hinreichender Anteil an Hartkomponente C) gebildet worden ist. Im allgemeinen wird es jedoch nötig sein, die bei der Pfropfmischpolymerisation erhaltenen Produkte mit zusätzlicher, separat hergestellter Hartkomponente C) abzumischen.

Bei dieser zusätzlichen, separat hergestellten Hartkomponente C) kann es sich um ein Styrol/Acrylnitril-Copolymerisat, ein $\alpha$-Methylstyrol/Acrylnitril-Copolymerisat, ein Styrol/Methylmethacryl-Copolymerisat, ein Styrol/Maleinsäureanhydrid-Copolymerisat oder ein $\alpha$-Methylstyrol/Styrol/-Acrylnitril-, ein Styrol/Acrylnitril/Methylmethacrylat-,

ein Styrol/Acrylnitril/Maleinsäureanhydrid oder ein Styrol/-
-Acrylnitril/Acrylsäure-Terpolymerisat, bzw. ein α-Methylstyrol/Styrol/Acrylnitril-Terpolymerisat handeln. Diese
Copolymerisate können einzeln oder auch in Mischung miteinander für die Hartkomponente eingesetzt werden, so daß es
sich bei der zusätzliche, separat hergestellten Hartkomponente C) der erfindungsgemäßen Mischungen beispielsweise
um eine Mischung aus einem Styrol/Acrylnitril-Copolymerisat
und einem α-Methylstyrol/Acrylnitril-Copolymerisat handeln
kann. In dem Fall, in dem die Hartkomponenten C) der erfindungsgemäßen Massen aus einer Mischung von einem Styrol/-
Acrylnitril-Copolymerisat und einem α-Methylstyrol/Acrylnitril-Copolymerisat besteht, soll der Acrylnitrilgehalt
der beiden Copolymerisate tunlichst nicht mehr als 10 Gew.%,
vorzugsweise nicht mehr als 5 Gew.%, bezogen auf das Copolymerisat, voneinander abweichen.

Die Hartkomponente C) der erfindungsgemäßen Massen kann jedoch auch nur aus einem einzigen Styrol/Acrylnitril-Copolymerisat bestehen, nämlich dann, wenn bei der Pfropfmischpolymerisation zur Herstellung der Komponenten B) als auch
bei der Herstellung der zusätzlichen, separat hergestellten
Hartkomponenten von dem gleichen Monomer-Gemisch aus Styrol
und Acrylnitril ausgegangen wird.

Die zusätzliche, separat hergestellte Hartkomponente C)
kann nach den herkömmlichen Methoden erhalten werden. So
kann die Copolymerisation des Styrols und/oder α-Methylstyrols mit dem Acrylnitril in Masse, Lösung, Suspension
oder wäßriger Emulsion durchgeführt werden. Die Hartkomponente (C) hat vorzugsweise eine Viskositätszahl, von 40
bis 100, insbesondere von 50 bis 80.

Die Abmischung der zusätzlich separat hergestellten Hartkomponente C) mit dem bei der Pfropfmischpolymerisation zur Herstellung der Komponente B) erhaltenen Produkt zu den erfindungsgemäßen Massen kann so vorgenommen werden, daß zuerst ein Teil der Hartkomponente C) mit dem Pfropfmischpolymerisat B) abgemischt und dann erst der Rest der Hartkomponente C) hinzugegeben wird. Die Abmischung kann aber auch in einem Schritt erfolgen.

Bevorzugt wird zur Herstellung der thermoplastischen Formmasse eine Schmelze des harten Polymerisats C) mit dem Pfropfmischpolymerisat A) + B), bei Temperaturen über 200°C intensiv vermischt.

Eine bevorzugte thermoplastische Formmasse weist eine elastomere Phase aus Butylacrylat und Tricyclodecenylacrylat auf und ist mit Styrol und Acrylnitril im Verhältnis 75 : 25 gepfropft und wird mit einer Styrol-Acrylnitril-Hartkomponente mit einem Acrylnitrilanteil von 35 Gew.% abgemischt.

Das Abmischen der Komponenten B) und C) kann nach allen bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Abmischen der Komponenten B) und C) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen [Komponente B)] können auch nur teilweise entwässert werden und als feuchte Krümel mit der Hartkomponente C) vermischt werden, wobei dann während des Ver-

0099532

mischens die vollständige Trocknung der Pfropfmischpolymerisate erfolgt.

Komponente D:

Die erfindungsgemäßen Mischungen aus den Komponenten B) und C) können als weitere Komponente D) Zusatzstoffe enthalten, wie sie für ASA-Polymerisate üblich und gebräuchlich sind. Als solche seien beispielsweise genannt: Füllstoffe, weitere verträgliche Kunststoffe, Antistatika, Antioxidantien, Flammschutzmittel und Schmiermittel. Die Zusatzstoffe werden in üblichen Mengen, vorzugsweise in Mengen von 0,1 bis zu insgesamt etwa 30 Gewichtsteilen, bezogen auf 100 Gewichtsteile der Mischung (A + B + C), eingesetzt.

Es hat sich überraschenderweise gezeigt, daß die erfindungsgemäßen Massen trotz des relativ großteiligen Pfropfmischpolymerisats B) eine sehr gute Einfärbbarkeit besitzen. Unter Einfärbbarkeit wird dabei die Erzielung brillianter Farbtöne mit möglichst kleinen Pigmentmengen verstanden. Die erfindungsgemäßen Massen können daher als Zusatzstoff D) insbesondere Farbstoffe oder Pigmente eingemischt enthalten. Die Farbstoffe oder Pigmente werden der Mischung üblicherweise in Mengen von etwa 0,02 bis etwa 10 Gewichtsteilen, vorzugsweise von 0,2 bis 5 Gew.%, bezogen auf 100 Gewichtsteile der Mischung (A + B + C), zugesetzt. Als Farbstoffe und Pigmente kommen beispielsweise in Betracht: Cadmiumsulfid, Kupfer-phthalocyanin, Eisenoxide, feinteilige Ruße. Die aus diesen eingefärbten Massen hergestellten Formkörper zeichnen sich durch einen ausgezeichneten Farbeindruck aus, wobei brilliante und leuchtende Farbtöne ohne jede Eintrübung oder Grauschleier erhalten werden können. Die aus den gefärbten Massen durch Spritzguß hergestellten Formkörper besitzen überraschender-

weise auch praktisch keine unterschiedliche Farbtönung im Bereich der Angußstelle und der Bindenaht, wie sie in unerwünschter Weise bei der Spritzgußverarbeitung von gefärbten ASA-Polymerisaten auf Basis von kleinteiligen Pfropfmischpolymerisaten der Komponente B) ansonsten im starken Maße zu beobachten ist. Die im Spritzguß verarbeiteten, gefärbten erfindungsgemäßen Massen zeigen hingegen eine gute Farbegalität im Bereich der Angußmarkierung und der Bindenaht. Selbst bei den nicht eingefärbten Formmassen ist keine Bindenahtmarkierung zu erkennen. Diese Massen der Erfindung besitzen neben der guten Einfärbbarkeit im Vergleich zu den bekannten ASA-Polymerisaten auch eine stark verbesserte Kerbschlagzähigkeit. Wie die nachfolgenden Beispiele zeigen, liegt dabei die Kerbschlagzähigkeit der erfindungsgemäßen Mischungen weit über den entsprechenden Werten der Einzelkomponenten. Es zeigt sich auch, daß die Schlagzähigkeit nach Bewitterung auf einem hohen Endniveau verbleibt und die Formmassen danach trotz Bewitterungsschädigung befriedigende mechanische Eigenschaften aufweisen.

Die erfindungsgemäßen Massen lassen sich nach den für die Thermoplastverarbeitung üblichen Verfahren, wie Extrusion und Spritzgießen, zu den verschiedenartigsten Formkörpern, wie Gartenmöbeln, Boote, Schilder, Straßenlampenabdeckungen und Kinderspielzeug verarbeiten. Wie erwähnt, eignen sich die erfindungsgemäßen Massen dabei insbesondere zur Herstellung von farbigen Formteilen bzw. Formkörpern der genannten Art, wie sie insbesondere bei Gartenstühlen, Kinderspielzeug und Hinweisschildern Anwendung finden.

Die in der vorliegenden Anmeldung beschriebenen Parameter wurden wie folgt bestimmt:

1. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bis 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2.  Die Schlagzähigkeit und Kerbschlagzähigkeit in $[KJ/m^2]$ der Produkte wurde nach DIN 53 453 an bei 250°C gespritzten Normkleinstäben bei der Raumtemperatur von 23°C gemessen. Die Schlagzähigkeiten der Versuchsbeispiele sind in Tabelle 1 zusammengefaßt.

3.  Die Bewitterungsversuche wurden im Xenotest 1200 an jeweils nicht stabilisiertem Material durchgeführt. Verfolgt wurde die Schlagzähigkeit im Verlauf der Belichtung insbesondere über den durch die UV-Bestrahlung verursachten Steilabfall der Zähigkeit hinaus.

4.  Die Viskositätszahlen $\eta$ sp/c in $(cm^3.g^{-1})$ wurden an einer 0,5 %igen Lösung in Methylethylketon bestimmt. Unlösliche Gelanteile wurden vor der Messung durch Zentrifugieren entfernt und bei der Einwaage des gesamten Polymerisats berücksichtigt.

5.  Die Beurteilung der Einfärbbarkeit erfolgt visuell an eingefärbten, durch Spritzguß hergestellten Formkörpern. Zur Einfärbung der Massen wurde dabei in allen Fällen 0,3 Gew.% an Ultramarinblau verwendet. Die Einfärbbarkeit wurde aufgrund des erhaltenen Farbeindruckes wie folgt benotet:

Note 1: rein, brillant und klar
Note 2: etwas stumpf, leicht verschleiert
Note 3: schmutzig und trübe, stark verschleiert.

6.  Die Bindenahtmarkierung wurde ebenfalls visuell an im Spritzguß hergestellten Formkörpern, die nicht eingefärbt waren, beurteilt und wie folgt benotet:

Note 1: keine Bindenahtmarkierung
Note 2: Bindenaht gerade zu erkennen
Note 3: starke Bindenaht.

Die Erfindung wird durch die nachfolgenden Beispiele näher erläutert. Die in den Beispielen genannten Teile und Prozente beziehen sich, sofern nicht anders angegeben, auf das Gewicht.

Beispiele

Herstellung eines Grundkautschukes, Komponente A1:

16 Teile Butylacrylat und 0,4 Teile Tricyclodecenylacrylat werden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumyhdrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Die mittlere Teilchengröße (Gewichtsmittel) wurde zu 216 nm ermittelt. Die Teilchengrößenverteilung war eng (Quotient Q = 0,29).

Herstellung eines Grundkautschuks, Komponente A2:

Zu einer Vorlage aus 2,5 Teilen des in Beispiel 1 (Komponente A) hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffin-
sulfonsäure in 25 Teilen Wasser bei 60°C zulaufen gelassen.
Nach Zulaufende wurde 2 Stunden nachpolymerisiert. Der erhaltene Latex des vernetzten Butylacrylat-Polymerisats hatte
einen Feststoffgehalt von 40 %. Die mittlere Teilchengröße
(Gewichtsmittel) des Latex wurde zu 410 nm ermittelt. Die
Teilchengrößenverteilung war eng (Q = 0,1).

Herstellung des Pfropfkautschukes, Komponente B1:

150 Teile des nach (A) erhaltenen Polybutylacrylat-Latex
wurden mit 20 Teilen Styrol und 60 Teilen Wasser gemischt
und unter Rühren nach Zusatz von weiteren 0,03 Teilen
Kaliumpersulfat und 0,05 Teilen Lauroylperoxid 3 Stunden
auf 65°C erhitzt. Nach Beendigung der ersten Stufe der
Pfropfmischpolymerisation hatte das Pfropfmischpolymerisat einen Pfropfgrad von 17 %. Diese Pfropfmischpolymerisatdispersion wurde ohne weitere Zusatzstoffe mit 20 Teilen
einer Mischung aus Styrol und Acrylnitril (Verhältnis
75 : 25) weitere 3 Stunden polymerisiert. Nach Beendigung
der Pfropfmischpolymerisation wurde das Produkt mittels
Calciumchloridlösung bei 95°C aus der Dispersion gefällt,
mit Wasser gewaschen und im warmen Luftstrom getrocknet. Der
Pfropfgrad des Pfropfmischpolymerisats betrug 35 %, die
mittlere Teilchengröße der Latexteilchen wurde zu 238 nm
ermittelt.

Herstellung des Pfropfkautschukes, Komponente B2:

150 Teile des nach A 2) erhaltenen Polybutylacrylat-Latex
wurden mit 20 Teilen Styrol und 60 Teilen Wasser gemischt
und unter Rühren nach Zusatz von weiteren 0,03 Teilen
Kaliumpersulfat und 0,05 Teilen Lauroylperoxid 3 Stunden auf
65°C erhitzt. Die bei dieser Pfropfmischpolymerisation
erhaltene Dispersion wurde dann mit 20 Teilen eines Gemisches

0099532

aus Styrol und Acrylnitril im Verhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt, die mittlere Teilchengröße der Latexteilchen betrug 490 nm.

Herstellung der Hartkomponente, Komponente C:

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 % und eine Viskositätszahl von 80 ml/g.

Beispiel 1

Herstellung der Abmischungen:

Das gefällte und getrocknete Pfropfmischpolymerisat B1 wird auf einem Extruder bei 260°C so mit der Hartkomponente C abgemischt, daß das resultierende Gemisch einen Pfropfkautschukgehalt von 25 Gew.% aufweist. Bei der Abmischung der Polymerisate auf dem Mischextruder werden 1 % eines Schmiermittels (Diethylphthalat) und der Farbstoff zugesetzt. Die in der nachfolgenden Tabelle zusammengestellten Eigenschaften der Mischungen wurden an den aus diesen Mischungen durch Spritzguß hergestellten Formkörpern ermittelt.

Beispiel 2

Als Hartkomponente C wurde das in Beispiel 1 beschriebene Styrol/Acrylnitril-Copolymerisat verwendet. Die Abmischung der Komponenten B2 + C erfolgte in analoger Weise wie in Beispiel 1 beschrieben. Auch die Zusatzstoffmenge war entsprechend.

### Beispiel 3

Der in Beispiel 2 beschriebene Pfropfkautschuk B2 wurde mit einem α-Methylstyrol-Acrylnitril-Copolymerisat, das als Hartkomponente C 30 Gew.% Acrylnitril enthält und eine Viskositätszahl von 59 ml/g aufwies, so abgemischt, daß 20 Gew.% Pfropfkautschuk im resultierenden Polymerisat enthalten waren.

### Beispiel 4

Es wurde entsprechend wie in Beispiel 1 gearbeitet, jedoch wurde in der zweiten Pfropfhülle bei der Komponente (B) ein Gemisch aus Styrol/Acrylnitril/Methylmethacrylat im Verhältnis 70 : 20 : 10 eingesetzt und als Hartkomponente (C) ein Terpolymerisat aus Styrol/Acrylnitril und Methylmethacrylat (70 : 20 : 10) mit einer Viskositätszahl von 70 ml/g eingesetzt.

### Beispiel 5

Es wurde der Pfropfkautschuk B2 von Beispiel 2 mit einer Hartkomponente (C) bestehend aus einem Styrol/Acrylnitril/-Maleinsäureanhydrid-Terpolymerisat (Monomerenverhältnis 70 : 20 : 10), das eine Viskositätszahl von 70 ml/g aufwies, so abgemischt, daß das Gemisch 25 Gew.% Pfropfkautschuk enthielt.

### Vergleichsversuch A

150 Teile des Grundkautschuks A1 werden mit 40 Teilen eines Gemisches aus Styrol und Acrylnitril im Verhältnis 70 : 25 und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Die Dispersion wurde, wie in Beispiel 1 beschrieben, aufgearbeitet und mit der in Beispiel 1 beschriebenen Hartkomponente C so abgemischt, daß ein Pfropfkautschukgehalt von 25 Gew.% resultierte.

## Vergleichsversuch B

150 Teile des Grundkautschuks A 2 werden mit 40 Teilen eines Gemisches aus Styrol und Acrylnitril im Verhältnis 75 : 25 und 60 Teilen Wasser gemischt und unter Rühren und Zusatz von weiteren 0,03 Teilen Kaliumpersulfat und 0,05 Teilen Lauroylperoxid 4 Stunden auf 65°C erhitzt. Die Aufarbeitung und Abmischung erfolgte wie in Beispiel 2 beschrieben.

Tabelle

| Beispiel | Kerbschlag-zähigkeit 280°C $[KJ/m^2]$ | Schlagzähigkeit $[KJ/m^2]$ nach 150 h Xenotest--Bewitterung | Einfärbbarkeit | Bindenaht-markierung |
|---|---|---|---|---|
| 1 | 28 | 30 | 1 | 2 |
| 2 | 36 | 35 | 1 | 1 |
| 3 | 32 | 34 | 1 | 1 |
| 4 | 38 | 36 | 1 | 2 |
| 5 | 28 | 28 | 1 | 1 |
| Vergleichs-versuche (nicht erfin-dungsgemäß) | | | | |
| A | 18 | 10 | 2 | 3 |
| B | 25 | 20 | 3 | 2 |

<u>Patentansprüche</u>

1. Thermoplastische Formmasse, bestehend aus

A) 1 bis 30 Gew.%, bezogen auf A + B + C, mindestens eines elastomeren Polymerisates, das eine Einfriertemperatur, Tg, von weniger als $0^{\circ}C$ und eine mittlere Teilchengröße von 200 bis 750 nm ($d_{50}$-Wert der integralen Masseverteilung) aufweist und aufgebaut ist aus:

$a_1$) 50 bis 99,9 Gew.% mindestens eines Alkylacrylates mit 1 bis 8 Kohlenstoffatomen im Alkylrest

$a_2$) 0,1 bis 5 Gew.% eines polyfunktionellen, vernetzend wirkenden Monomeren,

ggf. enthaltend

$a_3$) bis zu 50 Gew.% mindestens eines monoethylenisch ungesättigten Monomeren und

B) 5 bis 40 Gew.%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm ($d_{50}$-Wert der integralen Masseverteilung) aufweist, die wenigstens eines der Monomeren aus der Gruppe der

$b_1$) vinylaromatischen Monomeren und

b$_2$) der ethylenisch ungesättigten Monomeren enthält, sowie

C)  35 bis 94 Gew.%, bezogen auf A + B + C, eines Co-polymerisates, aufgebaut aus

c$_1$) mindestens einem vinylaromatischen Monomeren und

c$_2$) mindestens einem ethylenisch ungesättigten Monomeren,

ggf. ferner enthaltend

D)  übliche Zusatzstoffe in wirksamen Mengen,

dadurch gekennzeichnet, daß die Herstellung der Pfropfhülle B) in zwei Stufen erfolgt, wobei man in der ersten Stufe 20 bis 70 Gew.% der Monomeren b$_1$) und in der zweiten Stufe 30 bis 80 Gew.% eines Gemisches der Monomeren b$_1$) und b$_2$) im Gewichtsverhältnis 90 : 10 bis 60 : 40 anwendet.

2.  Thermoplastische Formmasse, bestehend aus

A)  1 bis 30 Gew.%, bezogen auf A + B + C, mindestens eines elastomeren Polymerisates, das eine Einfriertemperatur, Tg, von weniger als 0°C und eine mittlere Teilchengröße von 200 bis 750 nm (d$_{50}$-Wert der integralen Masseverteilung) aufweist und aufgebaut ist aus:

a$_1$) 95 bis 99,9 Gew.% Acrylsäure-n-butylester oder Acrylsäureethylhexylester,

a$_2$) 0,1 bis 5 Gew.% des Acrylesters des Tricyclodecenylalkohols, und

B)  5 bis 40 Gew.%, bezogen A + B + C, einer auf
das elastomere Polymerisat A aufgepfropften
Hülle, die als Monomere Styrol,$b_1$),und
Acrylnitril,($b_2$),enthält, und wobei das
resultierende Pfropfmischpolymerisat aus
A + B eine mittlere Teilchengröße von 200
bis 750 nm ($d_{50}$-Wert der integralen Masseverteilung) aufweist, sowie

C)  35 bis 94 Gew.%, bezogen auf A + B + C, eines
Copolymerisates, aufgebaut aus

$c_1$)  80 bis 60 Gew.% Styrol und/oder $\alpha$-Methyl-
styrol und
$c_2$)  20 bis 40 Gew.% Acrylnitril,

ggf. ferner enthaltend

D)  übliche Zusatzstoffe in wirksamen Mengen,

dadurch gekennzeichnet, daß die Herstellung der
Pfropfhülle B) in zwei Stufen erfolgt, wobei man in
der ersten Stufe 20 bis 70 Gew.% des Monomeren $b_1$)
und in der zweiten Stufe 30 bis 80 Gew.% eines
Gemisches der Monomeren $b_1$) und $b_2$) im Gewichtsverhältnis 90 : 10 bis 60 : 40 anwendet.

0099532

3. Verwendung der Formmassen gemäß Anspruch 1 zur Herstellung von Formteilen.

4. Formteile aus Formmassen gemäß Anspruch 1.